Europäisches Patentamt

European Patent Office

Office européen des brevets

(11) Veröffentlichungsnummer: **0 359 860**

**A1**

# EUROPÄISCHE PATENTANMELDUNG

(21) Anmeldenummer: 88115709.3

(51) Int. Cl.⁵: **H05B 41/29**

(22) Anmeldetag: 23.09.88

(43) Veröffentlichungstag der Anmeldung:
28.03.90 Patentblatt 90/13

(84) Benannte Vertragsstaaten:
AT BE CH DE ES FR GB GR IT LI LU NL SE

(71) Anmelder: **Siemens Aktiengesellschaft**
**Wittelsbacherplatz 2**
**D-8000 München 2(DE)**

(72) Erfinder: **Herfurth, Michael, Dipl.-Ing.**
**Ludwig-Thoma-Strasse 22**
**D-8031 Gilching(DE)**
Erfinder: **Söylemez, Ali-Ihsan**
**Hansjakobstrasse 123 a**
**D-8000 München 82(DE)**

(54) Verfahren und Vorrichtung zum Betreiben mindestens einer Gasentladungslampe.

(57) Die Erfindung stellt ein Verfahren und eine Vorrichtung zum Betreiben einer Gasentladungslampe, insbesondere einer Leuchtstofflampe vor, die durch einen fremdgesteuerten Lampengenerator (III) mit hochfrequenter Wechselspannung gespeist wird. Die Gasentla- dungslampe (22) ist im Normalbetrieb durch Variieren der Betriebs- frequenz ($f_B$) des Lampengenerators (III) dimmbar. Das Verfahren sieht vor, daß während einer Vorheizphase (a) die Betriebsfrequenz ($f_B$) des Lampengenerators (III) größer als die Nennfrequenz ($f_N$) im Nennbetrieb gewählt und anschließend die Betriebsfrequenz ($f_B$) so lange verringert wird bis die Gasentladungslampe (22) zündet. Nach dem Zünden der Gasentladungslampe (22) wird die Betriebsfrequenz ($f_B$) bis zur Nennfrequenz ($f_N$) verringert und anschließend der Normalbetrieb (d) e;ngeleitet.

FIG 4

EP 0 359 860 A1

## Verfahren und Vorrichtung zum Betreiben mindestens einer Gasentladungslampe

Die Erfindung betrifft ein Verfahren zum Betreiben mindestens einer Gasentladungslampe nach dem Oberbegriff des Anspruchs 1 und eine Vorrichtung zur Durchführung des Verfahrens.

Ein Verfahren zum Betreiben einer Niedervolt-Halogenlampe ist zum Beispiel in Siemens Components 22, 1984, Heft 6 auf den Seiten 249 bis 254 beschrieben. Aus dieser Veröffentlichung ist ein 100-kHz-Schaltnetzteil als fremdgesteuerter Lampengenerator zum Speisen der Niedervolt-Halogenlampe bekannt. Durch Verändern der Betriebsfrequenz des Schaltnetzteiles kann die Helligkeit der Halogenlampe verändert werden. Mit dieser bekannten Schaltungsanordnung ist es jedoch nicht möglich Gasentladungslampen, insbesondere Leuchtstofflampen, zu betreiben. Solche Gasentladungslampen müssen nämlich zum sicheren Durchzünden vorgeheizt und anschließend mit einer kurzzeitig hohen Spannung gezündet werden. Eine solche Steuerung ist mit der bekannten Schaltungsanordnung nicht möglich.

Es sind darüberhinaus Lampengeneratoren bekannt, die durch Rückkopplung selbstschwingende Halbrückenschaltungen mit bipolaren Transistoren vorsehen. Solche selbstschwingenden Lampengeneratoren sind z.B. in der DE-OS 33 01 108 oder DE-OS 35 11 661 beschrieben. Mit diesen selbstschwingenden Lampengeneratoren können allerdings Leuchtstofflampen nicht präzise vorgeheizt werden und damit Glimmentladungen entstehen. Ein freischwingender Lampengenerator ist zwar preiswert, problematisch besonders in der Massenfertigung ist aber die Streuung der elektrischen Eigenschaften der bipolaren Transistoren (z. B. Verstärkungsfaktor, Speicherzeit). Außerdem entsteht durch das temperaturabhängige Sättigungsverhalten des bei freischwingenden Lampengeneratoren verwendeten Stromwandlerübertragers eine Temperaturdrift, die mit zusätzlichem Aufwand kompensiert werden muß. Bei freischwingenden Lampengeratoren ist das Dimmen der Leuchtstofflampe außerdem nur durch ein Ändern der Eingangsspannung möglich. Diese Variation der Eingangsspannung ist wegen der Netzgleichrichtung und der erforderlichen Sinusstrom-Aufnahme aus dem Stromnetz nur schwierig zu realisieren.

Der Erfindung liegt die Aufgabe zugrunde, ein Verfahren zum Betreiben von Gasentladungslampen, insbesondere Leuchtstofflampen, anzugeben, das ein lampenschonendes Vorheizen, ein betriebssicheres Zünden, einen hohen Wirkungsgrad im geregelten Nennbetrieb und die Leistungssteuerung der Gasentladungslampe ermöglicht.

Diese Aufgabe wird durch die kennzeichnenden Merkmale des Anspruchs 1 gelöst.

Weiterbildungen der Erfindung sind Gegenstand der Unteransprüche.

Das erfindungsgemäße Verfahren wird im folgenden anhand von als besonders bevorzugte Ausführungsbeispiele zu wertenden Schaltungsanordnungen zur Durchführung des Verfahrens im Zusammenhang mit fünf Figuren näher erläutert. Es zeigen im einzelnen:

FIG 1 die Schaltungsanordung eines elektronischen Vorschaltgerätes mit fremdgesteuerten Lampengenerator in Halbbrückenschaltung,

FIG 2 eine Schaltungsanordnung nach FIG 1 mit einem fremdgesteuerten Lampengenerator mit Eintaktwandler,

FIG 3 ein Blockschaltbild für die Steuereinrichtung des fremdgesteuerten Lampengenerators nach FIG 1 und FIG 2,

FIG 4 eine Darstellung des zeitlichen Verlaufs der Betriebsfrequenz $f_B$ des Lampengenerators, der Lampenspannung $u_L$ und des Lampenstromes $i_L$, und

FIG 5 eine Schaltungsanordnung der Steuereinrichtung nach FIG 3.

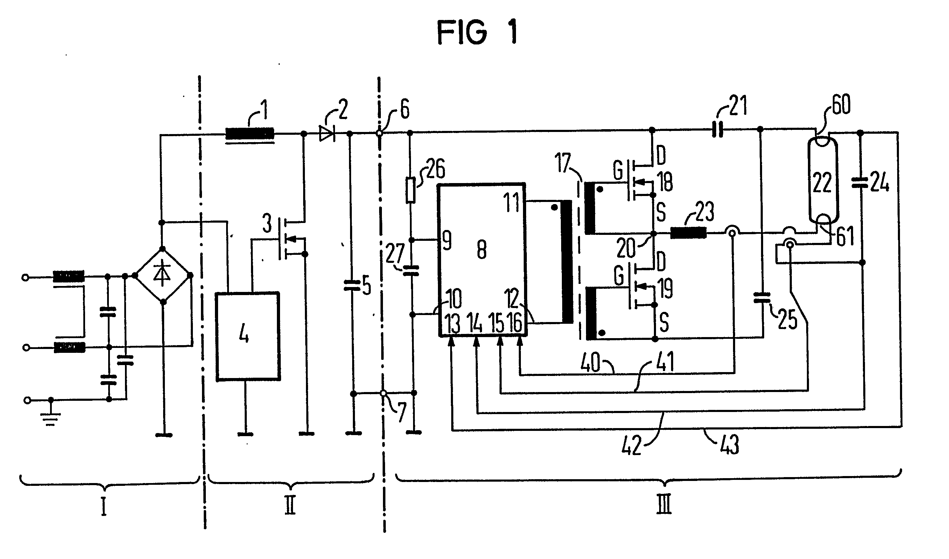

In FIG 1 ist ein komplettes elektronisches Vorschaltgerät, bestehend aus Hf-Filter mit Gleichrichtung I, Oberschwingungsfilter II und fremdgesteuerten Lampengenerator III dargestellt. Das Oberschwingungsfilter II besteht aus einem allgemein bekannten Hochsetzsteller, der eine Ladedrossel 1, eine Freilaufdiode 2, einen von einer Steuereinheit 4 ansteuerbaren Schalttransistor 3 und einem Ladekondensator 5 aufweist. Als Steuereinheit 4 kann z. B. die integrierte Schaltung TDA 4814 von Siemens eingesetzt werden. Das Oberschwingungsfilter II weist zwei Ausgangsklemmen 6, 7 auf, zwischen denen eine gleichgerichtete Spannung anliegt. Die zweite Ausgangsklemme 7 liegt auf Massepotential. An diese Ausgangsklemmen 6 und 7 ist der fremdgesteuerte Lampengenerator III geschaltet. Der fremdgesteuerte Lampengenerator III weist eine Steuereinrichtung 8 auf, an deren Ausgangsklemmen 11, 12 z. B. die Primärwicklung eines Übertragers 17 geschaltet ist. Sekundärseitig weist dieser Übertrager 17 zwei Sekundärwicklungen auf, an die jeweils ein elektrisches Schaltelement 18, 19 mit dessen Steuerstrecke geschaltet ist. Die beiden elektrischen Schaltelemente 18, 19, die vorzugsweise sogenannte SIPMOS®-Transistoren wegen derer günstigen elektrischen Eigenschaften sind, sind zu einer Halbbrücke geschaltet. Werden solche SIPMOS®-Transistoren verwendet, so ist der Drainanschluß D des das erste elektrische Schaltelement 18 bildenden SIPMOS®-Transistors mit der Anschlußklemme 6 verbunden. Der Sourceanschluß S dieses SIPMOS-Transistors ist dann am Verbindungspunkt 20 mit dem Drainanschluß D des das zweite elektrische Schaltelement 19 bildenden SIPMOS®-Transistors verbunden. Die Gateanschlüsse G und Sourceanschlüsse S dieser Transistoren sind in der oben beschriebenen Weise an die Sekundärwicklungen des Übertragers 17 geschaltet. Die Ausgangsklemme 6 des Oberwellenfilters II ist weiterhin über einen ersten Kondensator 21 mit einer ersten Anschlußklemme 60 einer Gasentladungslampe 22, vorzugsweise einer Leuchtstofflampe, verbunden. Zwischen eine zweite Anschlußklemme 61 der Gasentladungslampe 22 und dem Verbindungspunkt 20 der Halbbrücke ist eine Schwingkreisdrossel 23 geschaltet. Parallel zur Gasentladungs lampe 22 ist ein zweiter Kondensator 24 angeordnet. Die erste Anschlußklemme 60 der Gasentladungslampe 22 ist darüberhinaus über einen dritten Kondensator 25 mit dem Sourceanschluß S des das zweite elektrische Schaltelement 19 bildenden SIPMOS®-Transistors verbunden. Der fremdgesteuerte Lampengenerator III weist zusätzlich Mittel auf, um mindestens den Strom durch die Gasentladungslampe 22 zu erfassen. An den Eingangsklemmen 13, 14, 15 und 16 der Steuereinrichtung 8 ist es in diesem Ausführungsbeispiel vorgesehen über Verbindungsleitungen 40, 41, 42, 43 eine Größe für den Lampenstrom, die Lampenspannung und den Schwingkreisstrom einzuspeisen. Der Lampenstrom wird mit einem Differenzstromwandler gemessen.

Die Stromversorgung der Steuereinrichtung 8 erfolgt für den Selbstanlauf vorteilhafterweise über einen hochohmigen Widerstand 26, der zwischen die Anschlußklemme 6 und die Eingangsklemme 9 der Steuereinrichtung 8 geschaltet ist. Die ständige Stromversorgung der Steuereinrichtung 8 nach dem Selbstanlauf kann in bekannter, hier aus Gründen der besseren Übersichtlichkeit nicht dargestellter Weise durch den Leistungsteil des fremdgesteuerten Lampengenerators III aus einer Hilfswicklung auf der Schwingkreisdrossel 23 oder aus einer am Verbindungspunkt 20 der Halbbrücke mittels Kondensator abgreifenden Ladungspumpe erfolgen. Eine Eingangsklemme 10 der Steuereinrichtung 8 ist mit Bezugspotential verbunden. Zwischen die Eingangsklemmen 8 und 10 der Steuereinrichtung 8 ist ein vierter Kondensator 27 geschaltet.

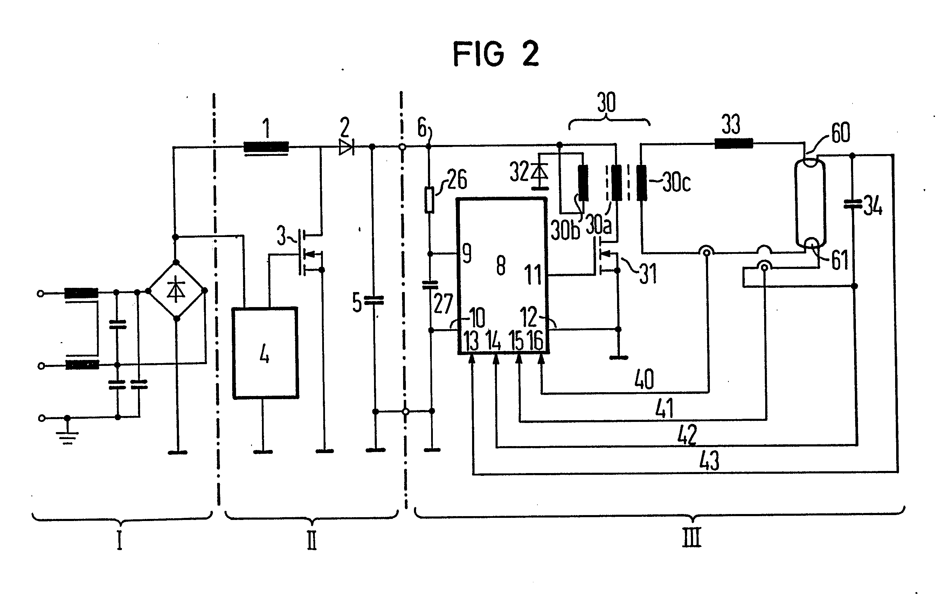

Die in FIG 2 gezeigte Schaltungsanordnung unterscheidet sich von der in FIG 1 dargestellten lediglich dadurch, daß der fremdgesteuerte Lampengenerator III einen Eintaktwandler mit einem Übertrager 30 und einem einzigen elektrischen Schaltelement 31 aufweist. Die aus FIG 1 bereits bekannten Bezugszeichen werden in der Schaltungsanordnung nach FIG 2 für gleichwirkende Teile weiterverwendet. An die Ausgangsklemmen 11 und 12 der Steuereinrichtung 8 ist jetzt die Steuerstrecke des elektrischen Schaltelementes 31 geschaltet. Zwischen die Anschlußklemme 6 und dem Ausgang des elektrischen Schaltelementes 31 ist eine Primärwicklung 30a des Übertragers 30 geschaltet. Zwischen der Anschlußklemme 6 und einer mit ihrer Anode an Bezugspotential geschalteten Diode 32 ist eine erste Sekundärwicklung 30b des Übertragers 30 geschaltet. Parallel zu einer zweiten Sekundärwicklung 30c dieses Übertragers 30 ist ein Serienschwingkreis bestehend aus einer Schwingkreisdrossel 33 und einem Kondensator 34 geschaltet. Parallel zu diesem Kondensator 34 ist die Gasentladungslampe, vorzugsweise eine Leuchtstofflampe, 22 mit ihren Anschlußklemmen 60 und 61 angeordnet. Die Schaltungsanordnung nach FIG 2 weist ebenfalls Mittel zum Erfassen mindestens des Schwingkreisstromes, vorzugsweise auch des Lampenstromes und der Lampenspannung auf. Über Verbindungsleitungen 40, 41, 42 und 43 werden die gemessenen Werte an die Eingangsklemmen 13, 14, 15 und 16 der Steuereinrichtung 8 geleitet. Auch hier wird der Lampenstrom mit einem Differenzstromwandler gemessen. Die Stromversorgung des Lampengenerators erfolgt wie im Zusammenhang mit FIG 1 bereits beschrieben.

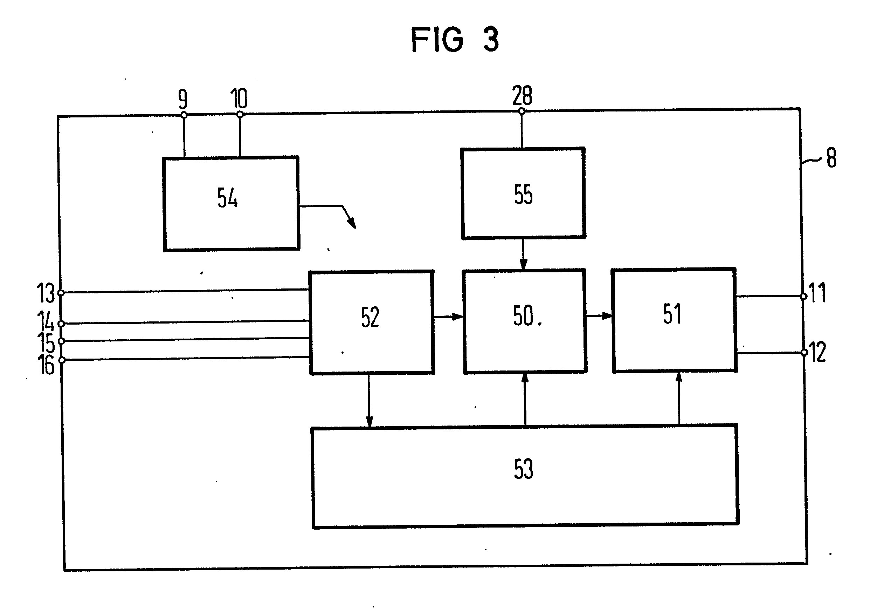

In FIG 3 ist das Blockschaltbild der Steuereinrichtung 8 dargestellt. Diese Steuereinrichtung 8 weist einen in seiner Frequenz veränderbaren Frequenzgenerator 50 mit nachgeschalteter Treiberstufe 51 und eine Zustandsüberwachungseinrichtung 52 zum Überwachen mindestens des Stromes der Gasentladungslampe 22 auf. Die Zustandsüberwachungseinrichtung 52 ist dazu mit den bereits bekannten Anschlußklemmen 13, 14, 15 und 16 verbunden. Die Steuereinheit 8 enthält weiterhin eine Ablaufsteuereinrichtung 53, die mit der Zustandsüberwachungseinrichtung 52, dem Frequenzgenerator 50 und der Treiberstufe 51 in Verbindung steht. Es ist weiterhin vorgesehen über eine Anschlußklemme 28 einer Sollwertvorgabeeinrichtung 55 ein vorgegebenes Signal zuzuführen. Die Sollwertvorgabeeinrichtung 55 generiert aus diesem Signal einen Sollwert für die Ausgangsfrequenz des Frequenzgenerators 50, der in Abhängigkeit von diesem Sollwert einstellbar ist. Die Steuereinrichtung 8 weist darüberhinaus eine Stromversorgungseinrichtung 54 auf, die mit den bereits bekannten Eingangsklemmen 9 und 10 verbunden ist. Diese Stromversorgungseinrichtung 54 beinhaltet eine Anlaufschaltung zum Anlaufen des im Zusammenhang mit den FIG 1 und 2 bereits bekannten fremdgesteuerten Lampengenerators III und zur internen Stromversorgung der Steuereinrichtung 8. Die Verbindungsleitungen der Stromversorgungseinrichtungen 54 zu den einzelnen Komponenten der Steuereinheit 8 sind der besseren Übersichtlichkeit wegen in FIG 3 nicht dargestellt. Die in der

Stromversorgungseinrichtung 54 beinhaltete Anlaufschaltung bewirkt, daß ein extern an die Steuereinheit 8 angeschlossener Kondensator aufgeladen wird und nach Erreichen einer oberen Schwellenspannung ein Selbstanlauf mit anschließender Eigenversorgung durch den Leistungsteil des fremdgesteuerten Lampengenerators III erfolgen kann, ehe eine untere Schwellenspannung mit erneutem Selbstanlaufzustand erreicht wird.

Über den Ausgang der Treiberstufe 51, der mit den Ausgangsklemmen 11 und 12 verbunden ist, kann z. B. ein Bipolartransistor bzw. MOS-Transistor direkt oder auch ein oder mehrere Schalttransistoren über einen Übertrager potentialfrei ange-steuert werden. Durch die Zustandsüberwachungs-einrichtung 52 kann im Zusammenwirken mit der Ablaufsteuereinrichtung 53 bei einer auftretenden Störung der Ausgang der Treiberstufe 51 gesperrt und/oder die Frequenz des Frequenzgenerators 50 nach oben verändert werden. Bei anhaltender Störung wird dieser Zustand solange eingehalten, bis ein geeignetes Reset-Signal die genannte Sperre aufhebt oder die Betriebsfrequenz $f_B$ des Frequenzgenerators 50 vermindert.

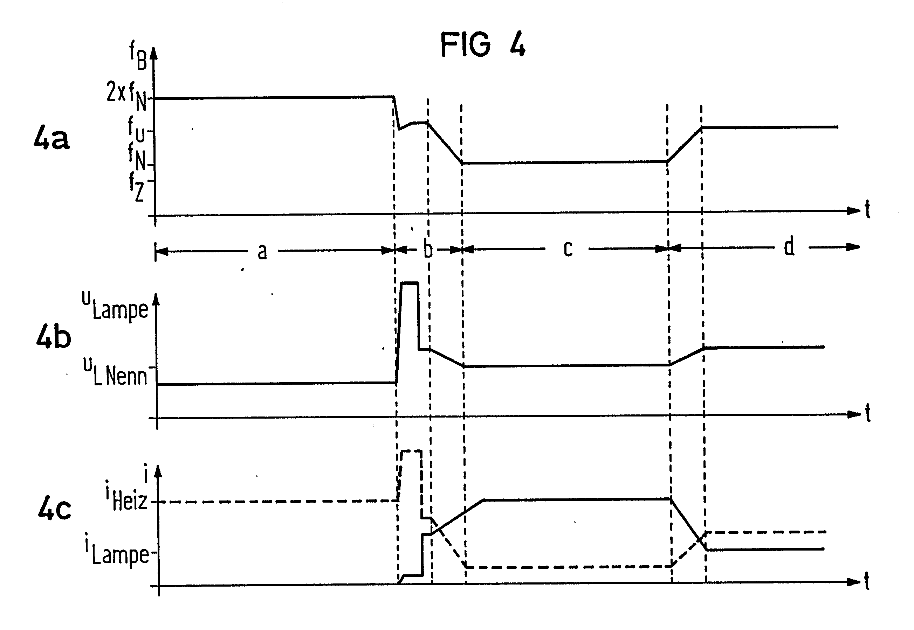

Das erfindungsgemäße Verfahren zum Betreiben einer Gasentladungslampe 22, insbesondere einer Leuchtstofflampe, stellt sich anhand des in FIG 4a dargestellten Verlaufes der Betriebsfrequenz $f_B$ bei zündwilliger Gasentladungslampe 22 wie folgt dar: Während einer Vorheizphase a wird die Betriebsfrequenz $f_B$ des Lampengenerators größer, vorzugsweise mindestens um den Faktor 1,5, als die Nennfrequenz $f_N$ im Nennbetrieb d. h. bei 100 % Last, gewählt. Zu Beginn der sich an die Vorheizphase a anschließenden Startphase b wird die Betriebsfrequenz $f_B$ so lange verringert bis die Gasentladungslampe 22 einen vorgegebenen Zu stand erreicht hat. Dieser vorgegebene Zustand wird durch Überwachund des Lampenzustandes, der sich z. B. durch den Lampenstrom und/oder die Lampenspannung ergibt, festgestellt. Die Be-triebsfrequenz $f_B$ wird bei Erreichen des vorgegebenen Zustandes mindestens auf ihrem momentanen Wert gehalten, und zwar so lange bis die Gasentladungslampe 22 zündet. Am Ende der Startphase b wird die Betriebsfrequenz $f_B$ bis zur Nennfrequenz $f_N$ verringert und dadurch der Nennbetrieb c der Gasentladungslampe eingeleitet. Im sich anschließenden Normal-oder Dimmbetrieb d kann die Betriebsfrequenz $f_B$ zum Dimmen und damit zum Einstellen der Helligkeit der Gasentladungslampe variiert werden. Es ist weiterhin vorgesehen, daß bei einer auftretenden Störung, wie z.B. einem Defekt in der Entladungsstrecke der Gasent-ladungslampe 22, eine Abweichung vom Normalbetrieb etc., ein Sicherheitsbetrieb des fremdgesteuerten Lampengenerators eingeleitet wird. Dieser Sicherheitsbetrieb kann darin bestehen, daß die Betriebsfrequenz $f_B$ erhöht und/oder der fremdgesteuerte Lampengenerator gesperrt wird.

Bei einer bevorzugten Weiterbildung der Erfindung ist es vorgesehen, die hochfrequente Wech-selspannung des fremdgesteuerten Lampengenera-tors in einen mit der Gasentladungslampe 22 beschalteten Resonanzkreis einzuspeisen, wobei die Resonanzfrequenz $f_U$ des Resonanzkreises bei nicht gezündeter Gasentladungslampe größer als die Nennfrequenz $f_N$ gewählt werden kann, jedoch die Resonanzfrequenz $f_Z$ bei gezündeter Gasentladungslampe kleiner als die Nennfrequenz $f_N$ ge-wählt wird, und daß die Betriebsfrequenz $f_B$ in der Vorheizphase a größer als die Resonanzfrequenz $f_U$ bei nicht gezündeter Gasentladungslampe eingestellt wird.

In FIG 4b ist der Spannungsverlauf $u_L$ an der Gasentladungslampe dargestellt, wie er sich ergibt, wenn die Betriebsfrequenz $f_B$ nach dem erfindungsgemäßen Verfahren eingestellt wird. $u_{LNen}$ bezeichnet die an der Gasentladungslampe 22 anliegende Spannung im Nennbetrieb, also bei voller Last. Es ist deutlich in FIG 4b zu erkennen, daß mit dem Absenken der Betriebsfrequenz $f_B$ zu Be ginn der Startphase b die Lampenspannung $u_L$ ansteigt und die Zündung der Gasentladungslampe 22 einsetzt. In FIG 4c ist der zu den FIG 4a und 4b gehörige Stromverlauf $i_L$ der Gasentladungslampe und der Stromverlauf des Resonanzkreises $i_{Heiz}$ dargestellt.

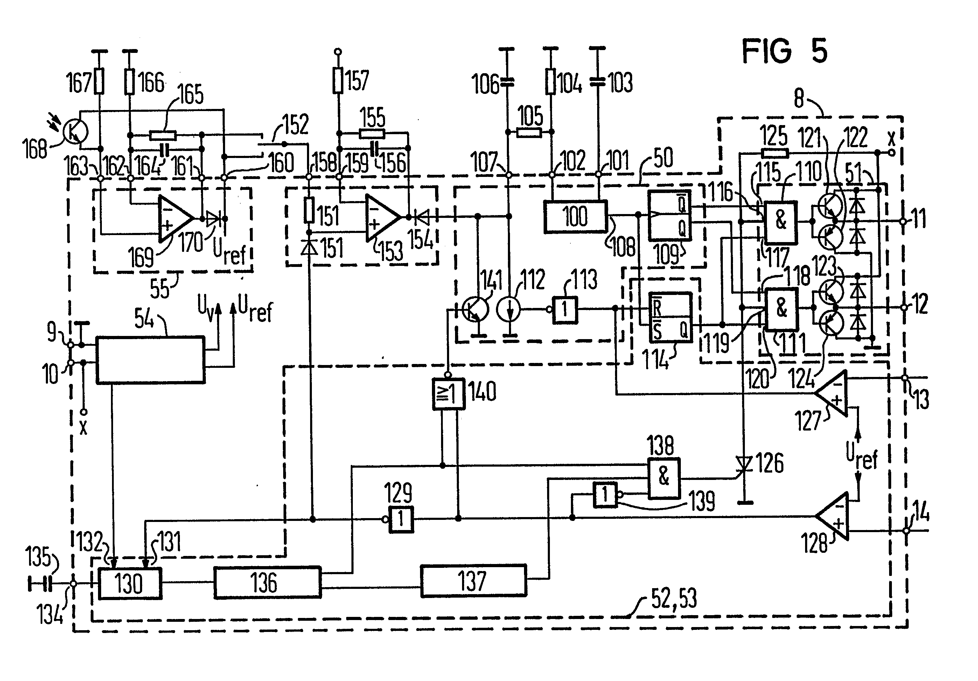

In FIG 5 ist im einzelnen ein Ausführungsbeispiel einer Schaltungsanordnung für die genannte Steuereinrichtung 8 dargestellt. Gleiche Bezugszeichen werden in dieser FIG 5 für die bereits be-kannten Schaltelemente verwendet. Der Frequenz-generator 50 weist einen ersten spannungsgesteuerten Oszillator 100 auf, dessen erste Eingangs-klemme 101 über einen Kondensator 103 mit Massepotential verbunden ist. Eine zweite Eingangs-klemme 102 dieses ersten spannungsgesteuerten Oszillators 100 ist über einen Widerstand 104 ebenfalls auf Massepotential geschaltet. Die Eingangsklemme 102 ist weiterhin mit einem Widerstand 105 verbunden, der seinerseits über einen weiteren Kondensator 106 auf Masse liegt. Der Verbindungspunkt zwischen Widerstand 105 und Kondensator 106 ist mit einer Eingangsklemme 107 der Steuereinrichtung 8 verbunden. Diese Eingangsklemme 107 ist mit einer Stromsenke 112 in Verbindung. Die Ausgangsklemme 108 des spannungsgesteuerten Oszillators 100 ist mit dem Takteingang eines Flip-Flops 109 verbunden. Der inver-tierende Ausgang $\overline{Q}$ dieses Flip-Flops 109 ist mit einer Eingangsklemme 115 eines UND-Gatters 110 der Treiberstufe 51 verbunden. Der nicht invertierende Ausgang Q des Flip-Flops 109 ist mit einer Eingangsklemme 118 eines weiteren UND-Gatters 111 der Treiberstufe 51 verbunden. An weitere Eingangsklemmen 116 und 119 der UND- Gatter 110 und 111 ist über einen Widerstand 125 die Eingangsklemme 10 der Steuereinrichtung 8 angeschlossen. Außerdem sind diese Eingangsklemmen 116 und 119 mit der Anode eines Thyristors 126 verbunden. Der Katodenanschluß dieses Thyristors 126 liegt auf Massepotential. Die UND-Gatter 110 und 111 weisen jeweils einen weiteren Eingang 117 und 120 auf, die mit dem nicht invertierenden Ausgang Q eines RS-Flip-Flops 114 verbunden sind. Der $\overline{S}$-Eingang dieses RS-Flip-Flops 114 ist mit der Ausgangsklemme 108 des spannungsgesteuerten Oszillators 100 verbunden. Der $\overline{R}$-Eingang des RS-Flip-Flops 114 ist über ein Invertierglied 113 mit der Strom senke 112 in Verbindung. An die Ausgangsklemmen der UND-Gatter 110 und 111 sind jeweils die Steueranschlüsse komplementärer Emitterfolger, bestehend aus den mit Freilaufdioden versehenen Transistoren 121 und 122 bzw. 123 und 124 geschaltet.

Der aus den Transistoren 121 und 122 gebildete komplementäre Emitterfolger besteht aus einem npn-Transistor 121 und einem pnp-Transistor 122, deren Basisanschlüsse mit der Ausgangsklemme des UND-Gatters 110 verbunden sind. Die Emitteranschlüsse der Transistoren 121 und 122 sind gemeinsam mit der Ausgangsklemme 11 verbunden, während der Kollektoranschluß des npn-Transistors 121 an die Eingangsklemme 10 und der Kollektoranschluß des pnp-Transistors 122 an die Eingangsklemme 9, also an Masse angeschlossen ist. Der zweite komplementäre Emitterfolger, bestehend aus den Transistoren 123 und 124, ist in entsprechender Weise an das UND-Gatter 111 angeschlossen.

Diese komplementären Emitterfolger arbeiten im Gegentakt und ermöglichen über die Ausgangsklemmen 11 und 12 sowohl die direkte Ansteuerung von Leistungs-Transistoren als auch über einen Über- trager die galvanisch getrennte Ansteuerung von MOS-Transistoren, ohne zusätzliche aktive Treiberbauelemente. Die Entladung der MOS-Transistor-Eingangskapazität in Leistungs-MOS-Transistoren bei galvanisch getrennter Ansteuerung erfolgt durch aktiven Kurzschluß der Primärwicklung während der Tastlücke. Die Ansteuerung von bipolaren Transistoren ist grundsätzlich mit dieser Treiberstufe 51 auch möglich.

Die Steuereinrichtung 8 weist weiterhin einen ersten Komparator 127 und einen zweiten Komparator 128 auf. Der invertierende Eingang des Komparators 127 ist mit der Eingangsklemme 13 und der nicht invertierende Eingang des Komparators 128 mit der Eingangsklemme 14 verbunden. Der nicht invertierende Eingang des Komparators 127 und der invertierende Eingang des Komparators 128 sind mit einer Ausgangsklemme der Stromversorgung 54 verbunden, die die Referenzspannung $U_{ref}$ für die Steuereinrichtung 8 zur Verfügung stellt. Die Stromversorgungseinrichtung 54 hat darüber hinaus einen weiteren Ausgang, an dem die zur Versorgung der Steuereinrichtung 8 nötige Spannung $U_V$ anliegt. Die Stromversorgungseinrichtung 54 ist an die bereits bekannten Klemmen 9 und 10 der Steuereinrichtung 8 angeschlossen. Die Klemme 9 liegt auf Masse.

Die Ausgangsklemme des bereits beschriebenen Komparators 127 ist mit dem $\overline{R}$-Eingang des RS-FLip-Flops 114 verbunden. Der zweite Komparator 128 der Ablaufsteuereinrichtung 53 mit Zustandsüberwachungseinrichtung 52 ist an seinem Ausgang über einen Invertierer 129 an eine Eingangsklemme 131 eines zweiten spannungsgesteuerten Oszillators 130 angeschlossen. Die Ausgangsfrequenz dieses zweiten spannungsgesteuerten Oszillators 130 ist über einen an eine Eingangsklemme 134 anschließbaren Kondensator 135 festlegbar. Der Ausgang dieses zweiten spannungsgesteuerten Oszillators 130 ist mit einer ersten Verzögerungsstufe 136 verbunden, die ihrerseits mit einer zweiten Verzögerungsstufe 137 in Kontakt steht. Der zweite spannungsgesteuerte Oszillator 130 ist darüberhinaus mit der Stromversorgungseinrichtung 54 verbunden. Ein weiterer Ausgang der ersten Verzögerungsstufe 136 ist mit einem Eingang eines ODER-Gatters 140 und einem Eingang eines weiteren UND-Gatters 138 verbunden. An einen weiteren Eingang des UND-Gatters 138 ist der Ausgang der zweiten Verzögerungsstufe 137 angeschlossen. Über ein Invertierglied 139 gelangt das am Ausgang des zweiten Komparators 128 anstehende Signal an einen weiteren Eingang des UND-Gatters 138. Der Ausgang dieses UND-Gatters 138 ist mit der Gateelektrode des Thyristors 126 in Kontakt. Das am zweiten Differenzverstärker 128 anstehende Signal gelangt auch über eine weitere Verbindungsleitung an einen weiteren Eingang des ODER-Gatters 140, dessen invertierender Ausgang an den Basisanschluß eines npn-Transistors 141 angeschlossen ist. Der Emitteranschluß dieses npn-Transistors 141 liegt auf Massepotential, während der Kollektoranschluß mit der bereits bekannten Anschlußklemme 107 verbunden ist. An den Kollektoranschluß dieses Transistors 141 ist weiterhin die Anode einer Diode 154 angeschlossen, deren Katodenanschluß mit dem Ausgang eines Differenzverstärkers 153 verbunden ist. Der invertierende Eingang dieses dritten Differenzverstärkers 153 ist mit einer Anschlußklemme 159 der Steuer-einrichtung 8 verbunden, an der über einen Widerstand 157 der an der Gasentladungslampe gemessene Strom eingespeist wird. Zwischen den Katodenanschluß der Diode 154 und der Klemme 159 ist sowohl ein Kondensator 156 als auch ein Widerstand 155 parallel geschaltet. Zwischen einer weiteren Klemme 158 und dem nicht invertierenden Eingang des Differenzverstärkers 153 ist ein Widerstand 151 geschaltet. Außerdem steht der nicht invertierende Eingang des Differenzverstärkers 153 mit dem Katodenanschluß einer weiteren Diode 150 in Kontakt, deren Anodenanschluß mit dem Ausgang des Invertierers 129 verbunden ist.

An die Eingangsklemme 158 kann über eine Schalteinrichtung 152 wahlweise ein Sollwert vorgegeben werden, der aus einer Referenzspannungsquelle bei konstanter Lampenleistung oder bei einstellbarer Lampenleistung aus einer Sollwertaufbereitung bezogen wird. Diese Sollwertaufbereitung kann z. B. aus einem Anpassungsverstärker 169 mit Tiefpaßverhalten bestehen, womit beispielsweise ein analoges Steuersignal von einem Helligkeitssensor oder ein durch Pulsweitenmodulation codiertes Signal über einen Optokoppler der Lampenstromregelung angepaßt werden kann. Der Anpas sungsverstärker mit Tiefpaßverhalten kann z. B. darin bestehen - wie in der FIG 5 gezeigt - daß der invertierende Eingang eines Differenzverstärkers 169 mit einer Anschlußklemme 162 verbunden ist, die über einen Widerstand 166 an Massepotential geschaltet ist. Der nicht invertierende Eingang dieses Differenzverstärkers 169 ist an einer Eingangsklemme 163 angeschlossen, die auch über einen Widerstand 167 an Masse geschaltet ist. Der Ausgang des Differenzverstärkers 169 ist an die Anode einer Diode 170 und mit einer Anschlußklemme 161 verbunden. Der Kathodenanschluß der Diode 170 steht mit der Spannung $U_{ref}$ der Stromversorgungseinrichtung 54 in Verbindung. Zwischen der Anschlußklemme 161 und der Anschlußklemme 162 ist die Parallelschaltung eines Kondensators 164 und eines Widerstandes 165 angeordnet. Über die Schalteinrichtung 152 kann die Eingangsklemme 158 wahlweise auf die Klemme 160, an der die Referenz spannung $U_{ref}$ anliegt, oder auf die Eingangsklemme 161 geschaltet werden. Zwischen die Eingangsklemmen 163 und 160 ist ein Fotoelement, z. B. ein Fototransistor 168, mit seiner Laststrekke geschaltet. Die hier vorgestellte Schaltungsanordnung kann auch in integrierter Form ausgeführt sein.

Die Wirkungsweise dieser Schaltungsanordnung stellt sich so dar: Über den Widerstand 26 wird der zwischen den Eingangsklemmen 9 und 10 der Steuereinrich- tung 8 geschaltete Kondensator 27 aus der gleichgerichteten Netzspannung geladen. Eine Standby-Funktion der Stromversorgung 54 verhindert eine Stromaufnahme durch die Steuereinrichtung 8 und überwacht den Ladevorgang bei geringem Eigenverbrauch. Sobald eine obere Schwellenspannung erreicht ist, gibt die Stromversorgungseinrichtung 54 den Strom für die Steuereinrichtung 8 frei. Die nötige Energie wird dem Kondensator 27 entnommen, solange bis entweder eine Eigenversorgung über den Leistungsteil des fremdgesteuerten Lampengenerators III möglich ist oder die Kondensatorspannung eine untere Schwellenspannung erreicht und der Standby-Betrieb erneut einsetzt.

Sobald die Stromversorgungseinrichtung 54 für die Steuereinrichtung 8 freigegeben ist, werden die Leistungstransistoren über die Treiberstufe 51 durch den Frequenzgenerator 50 angesteuert. Der Frequenzgenerator 59 beginnt mit derjenigen Betriebsfrequenz $f_B$, die für die Vorheizphase der Leuchtstofflampe vorgesehen und durch den Kondensator 103 und die Widerstände 104 und 105 bestimmt ist. Die Widerstände 104 und 105 wirken auf den Stromspiegel 112 zur Ladung des Kondensators 103. Bei entladenem oder kurzgeschlossenem Kondensator 106 wirkt die Parallelschaltung der Widerstände 105 und 104. Die Zustandsüberwachungseinrichtung 52 erkennt in dieser Betriebsphase, daß der an der Eingangsklemme 14 eingespeiste Lampenstrom gleich oder nahezu Null ist und leitet die Störfallaktivierung ein. Dabei wird der Kondensator 106 kurzgeschlossen, wodurch die Betriebsfrequenz $f_B$ erfindungsgemäß eingestellt wird. Die Lampenstromregelung ist gesperrt und eine erste Verzögerungsstufe wird aktiviert. Während dieser ersten Verzögerungsdauer von z. B. 0,3 bis 0,5 sec. wird die Gasentladungslampe vorgeheizt.

Sollte die Gasentladungslampe vor Ablauf der Vorheizphase zünden, was z. B. durch eine bereits erwärmte Lampe der Fall sein kann, so erkennt die Zustandsüberwachungseinrichtung 52 durch den nun fließenden Lampenstrom den Normalbetrieb, bricht die Ablaufsteuerung ab und gibt die Lampenstromregelung frei.

Im allgemeinen wird nach Ablauf der ersten Verzögerungsstufe 136 der Zündvorgang eingeleitet und die zweite Verzögerungsstufe 137 aktiviert. In der Zündphase b wird der Kurzschluß des Kondensators 106 aufgehoben, wodurch der Kondensator 103 über den Widerstand 105 langsam aufgeladen wird und die Betriebsfrequenz $f_B$ sinkt. Bei nicht zündender Gasentladungslampe wird die tiefste Be- triebsfrequenz durch den Widerstand 104 bestimmt, die vorzugswei- se tiefer als die Resonanzfrequenz $f_U$ des unbelasteten Lampenschwingkreises liegt. Die tiefste Betriebsfrequenz $f_B$ wird allerdings während der Zündphase nicht erreicht, weil in der Nähe der Resonanzfrequenz die Strombegrenzung zum Schutz der Transistoren eingreift. Die Strombegrenzung wirkt bei Überschreiten eines vorgegebenen Schwellwertes durch sofortiges Sperren der Transistoren (Verkürzung der Einschaltdauer) als auch durch ein allmähliches Anheben der Betriebsfrequenz $f_B$ durch Entladung des Kondensators 106 über eine Stromsenke. Beim Zünden der Gasentladungslampe erkennt die Zustandsüberwachungseinrichtung 52 den Normalbetrieb, bricht die Anlaufsteuerung ab und gibt die Lampenstromregelung frei. Damit ist vorteilhaft sofort nach dem sicheren Zünden der Gasentladungslampe ein Betrieb mit gedimmter Lampenleistung möglich. Zündet die Gasentladungslampe nicht während der Verzögerungsdauer der zweiten Verzögerungsstufe 137 von z. B. einer bis zwei Sekunden, so wird die Treiberstufe 51 gesperrt und ein Wiederanlauf verhindert. Dies geschieht solange bis der Haltestrom des Thyristors 126 durch ein im einzelnen nicht dargestelltes Reset-Signal oder eine Netzunterbrechung unterschritten wird. In derselben Weise wie beim Startvorgang wirkt die Zustandsüberwachungseinrichtung bei einem Defekt der Lampe bei vorangegangenem Normalbetrieb.

Bezugszeichenliste

I Hf-Filter mit Gleichrichtung
II Oberschwingungsfilter
III fremdgesteuerter Lampengenerator
a Vorheizphase
b Startphase
c Nennbetrieb
d Dimmbetrieb, Normalbetrieb
1 Ladedrossel
2 Freilaufdiode
3 Schalttransistor
4 Steuereinheit
5 Ladekondensator
6 erste Ausgangsklemme des Oberwellenfilters
7 zweite Ausgangsklemme des Oberwellenfilters
8 Steuereinrichtung
9 erste Anschlußklemme für Stromversorgung
10 zweite Anschlußklemme für Stromversorgung
11 erste Ausgangsklemme der Steuereinrichtung
12 zweite Ausgangsklemme der Steuereinrichtung
13, 14 Eingangsklemmen der Steuereinrichtung zum Messen des
15, 16 Lampenstromes, Lampenspannung und Schwingkreisstromes
17 Übertrager der Halbbrücke
18 erstes elektrisches Schaltelement der Halbbrücke
19 zweites elektrisches Schaltelement der Halbbrücke
20 Verbindungspunkt des ersten und zweiten elektrischen Schaltelementes
21 erster Kondensator
22 Gasentladungslampe/Leuchtstofflampe
23 Schwingkreisdrossel
24 zweiter Kondensator
25 dritter Kondensator
26 Widerstand
27 vierter Kondensator
28 Anschlußklemme der Sollwertvorgabeeinrichtung
30 Übertrager des Eintaktwandlers
30 a Primärwicklung
30 b erste Sekundärwicklung
30 c zweite Sekundärwicklung
31 Schaltelement des Eintaktwandlers
32 Diode
33 Schwingkreisdrossel
34 Kondensator
40, 41, 42, 43 Verbindungsleitungen zum Messen des Lampenstromes etc.
50 Frequenzgenerator
51 Treiberstufe
52 Zustandsüberwachungseinrichtung
53 Ablaufsteuereinrichtung
54 Stromversorgungseinrichtung
55 Sollwertvorgabeeinrichtung
60 erste Anschlußklemme der Gasentladungslampe
61 zweite Anschlußklemme der Gasentladungslampe
100 erster spannungsgesteuerter Oszillator
101 erste Eingangsklemme
102 zweite Eingangsklemme
103 Kondensator
104 Widerstand
105 Widerstand
106 Kondensator
107 Eingangsklemme
108 Ausgangsklemme
109 Flip-Flop
110, 111 UND-Gatter
112 Stromsenke
113, 129, 139 Invertierer
114 RS-Flip-Flop
115, 116, 117 Eingangsklemmen des UND-Gatters 110
118, 119, 120 Eingangsklemmen des UND-Gatters 111
121, 122 erster komplementärer Emitterfolger
123, 124 zweiter komplementärer Emitterfolger
125 Widerstand
126 Thyristor
127 erster Komparator
128 zweiter Komparator
130 zweiter spannungsgesteuerter Oszillator
131, 132, 134 Eingangsklemmen des spannungsgesteuerten Oszillators 130
135 Kondensator
136 erste Verzögerungsstufe
137 zweite Verzögerungsstufe

140 ODER-Gatter

141 npn-Transistor

150 Diode

151, 155, 157 Widerstand

157 Widerstand

152 Schaltelement

153, 169 Differenzverstärker

154, 170 Diode

158, 159, 160, 161, 162, 163 Eingangsklemmen

164 Kondensator

165, 166, 167 Widerstand

168 Fototransistor

$f_N$ Nennfrequenz

$f_B$ Betriebsfrequenz

$f_U$ Frequenz des unbelasteten Schwingkreises

$f_Z$ Frequenz des belasteten Schwingkreises

$u_L$ Lampenspannung

$u_{LNenn}$ Nennspannung der Lampe

$i_L$ Lampenstrom

$i_{Heiz}$ Strom des Schwingkreises

G Gateanschlüsse der SIPMOS-Transistoren

D Drainanschlüsse der SIPMOS-Transistoren

S Sourceanschlüsse der SIPMOS-Transistoren

**Ansprüche**

1. Verfahren zum Betreiben mindestens einer Gasentladungslampe, **dadurch gekennzeichnet,** daß die Gasentladungslampe durch einen fremdgesteuerten Lampengenerator mit hochfrequenter Wechselspannung gespeist wird, wobei die Gasentladungslampe durch Variieren der Betriebsfrequenz $f_B$ des Lampengenerators dimmbar ist; daß der Lampenzustand überwacht wird; daß zum Zünden der Gasentladungslampe eine Vorheizphase (a) mit anschließender Startphase (b) vorgesehen wird; daß während der Vorheizphase (a) die Betriebsfrequenz ($f_B$) des Lampengenerators größer als die Nennfrequenz ($f_N$) im Nennbetrieb gewählt wird; daß zu Beginn der Startphase (b) die Betriebsfrequenz ($f_B$) so lange verringert wird, bis die Gasentladungs-lampe einen vorgegebenen Zustand erreicht hat, und die Betriebs- frequenz ($f_B$) anschließend mindestens auf ihrem momentanen Wert gehalten wird bis die Gasentladungslampe zündet; daß am Ende der Startphase (b) die Betriebsfrequenz ($f_B$) bis zur Nennfrequenz ($f_N$) verringert und dadurch der Nennbetrieb (c) eingeleitet wird; daß die Betriebsfrequenz ($f_B$) im anschließenden Dimmbetrieb (d) zum Dimmen variiert wird.

2. Verfahren nach Anspruch 1, **dadurch gekennzeichnet,** daß der Lampenstrom und/oder die Lampenspannung der Gasentladungslampe überwacht wird.

3. Verfahren nach Anspruch 1 oder 2, **dadurch gekennzeichnet,** daß bei einer auftretenden Störung die Betriebsfrequenz ($f_B$) erhöht wird.

4. Verfahren nach Anspruch 1 oder 2, **dadurch gekennzeichnet,** daß bei einer auftretenden Störung der fremdgesteuerte Lampengenerator gesperrt wird.

5. Verfahren nach einem der Ansprüche 1 bis 4, **dadurch gekennzeichnet,** daß die hochfrequente Wechselspannung des fremdgesteuerten Lampengenerators in einen mit der Gasentladungslampe beschalteten Resonanzkreis eingespeist wird, wobei die Resonanzfrequenz ($f_U$) des Resonanzkreises bei nicht gezündeter Gasentladungslampe größer als die Nennfrequenz ($f_N$) ge- wählt wird, jedoch die Resonanzfrequenz ($f_Z$) bei gezündeter Gasent- ladungslampe kleiner als die Nennfrequenz ($f_N$) gewählt wird, und daß die Betriebsfrequenz ($f_B$) zum Zünden der Lampe größer als die Resonanzfrequenz ($f_U$) bei nicht gezündeter Gasentladungslampe eingestellt wird.

6. Verfahren nach einem der Anspüche 1 bis 5, **dadurch gekennzeichnet,** daß in der Vorheizphase die Betriebsfrequenz ($f_B$) mindestens um den Faktor 1,5 größer als die Nennfrequenz ($f_N$) gewählt wird.

7. Vorrichtung zur Durchführung des Verfahrens nach einem der Ansprüche 1 bis 6, **dadurch gekennzeichnet,** daß der fremdgesteuerte Lampengenerator (III) eine Steuereinrichtung (8) zum Ansteuern mindestens eines eine Gleichspannung periodisch ein- und ausschaltenden Leistungsschalters (18, 19) enthält,
daß die Steuereinrichtung (8) weiterhin aufweist
- einen in seiner Frequenz veränderbaren Frequenzgenerator (50) mit nachgeschalteter Treiberstufe (51),
- eine Zustandsüberwachungseinrichtung (52) zum Überwachen mindestens des Stromes der Gasentladungslampe (22), - eine Stromversorgungseinrichtung (54) zum Anlaufen des fremdgesteuerten Lampengenerators (III) und zur internen Stromversorgung der Steuereinrichtung (8), und
- eine Ablaufsteuereinrichtung (53) zum zeitlich definierten Variieren der Frequenz des Frequenzgenerators (50) unter Berücksichtigung der Ausgangssignale der Zustandsüberwachungseinrichtung (52).

8. Vorrichtung nach Anspruch 7, **dadurch gekennzeichnet,** daß die Steuereinrichtung (8) Mittel zum Erzeugen eines Sollwertes für die Ausgangsfrequenz des Frequenzgenerators (50) aufweist und der Frequenzgenerator (50) in Abhängigkeit von diesem Sollwert einstellbar ist.

9. Vorrichtung nach Anspruch 7 oder 8, **dadurch gekennzeichnet,** daß die Zustandsüberwachungseinrichtung (52) weiterhin Mittel zum Überwachen der Spannung der Gasentladungslampe (22) aufweist.

10. Vorrichtung nach einem der Ansprüche 7 bis 9, **dadurch gekennzeichnet,** daß die Steuereinrichtung (8) des fremdgesteuerten Lampengenerators (III) integriert ausgeführt ist.

FIG 1

FIG 2

## FIG 3

EP 0 359 860 A1

# FIG 4

4a

$f_B$

$2 \times f_N$

$f_U$

$f_N$

$f_Z$

t

a | b | c | d

4b

$u_{Lampe}$

$u_{L\,Nenn}$

t

4c

i

$i_{Heiz}$

$i_{Lampe}$

t

EP 0 359 860 A1

88 P 1 6 1 2 E

FIG 5

Europäisches
Patentamt

**EUROPÄISCHER RECHERCHENBERICHT**

Nummer der Anmeldung

EP    88 11 5709

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | DE-A-3432266 (KNOBEL)<br>* Seite 9, Zeile 30 - Seite 12, Zeile 28;<br>Figuren 1-3 *<br>--- | 1-3, 5-8 | H05B41/29 |
| X | EP-A-127101 (SIEMENS)<br>* das ganze Dokument *<br>--- | 1, 2, 4, 9 | |
| X | EP-A-178852 (THOMAS INDUSTRIES)<br>* Seite 13, Zeile 8 - Seite 15, Zeile 32;<br>Figuren 3-5 *<br>--- | 1-3, 9, 10 | |
| X | EP-A-059064 (THORN)<br>* Seite 4, Zeile 6 - Seite 5, Zeile 21 *<br>* Zusammenfassung; Figur 1 *<br>----- | 1-3, 5, 6-10 | |

|  |
|---|
| **RECHERCHIERTE SACHGEBIETE (Int. Cl.4 )** |
| H05B |

Der vorliegende Recherchenbericht wurde für alle Patentansprüche erstellt

| Recherchenort | Abschlußdatum der Recherche | Prüfer |
|---|---|---|
| DEN HAAG | 20 APRIL 1989 | SPEISER P. |